# EUROPEAN PATENT SPECIFICATION

(11) **EP 3 593 752 B1**
(45) Date of publication and mention of the grant of the patent: **25.01.2023**
(21) Application number: 18835179.5
(22) Date of filing: 20.02.2018
(51) Int. Cl.: A61C 8/00

(54) **DENTAL IMPLANT**
ZAHNIMPLANTAT
IMPLANT DENTAIRE

(30) Priority: 17.07.2017 RU 2017125447
(43) Date of publication of application: 15.01.2020
(73) Proprietor: Chernovol, Nikita Sergeevich, St. Petersburg 194354 (RU)
(72) Inventor: Chernovol, Nikita Sergeevich, St. Petersburg 194354 (RU)
(74) Representative: Tergau & Walkenhorst Patentanwälte PartGmbB
(86) International application number: PCT/RU2018/000097
(87) International publication number: WO 2019/017813

(56) References cited:
- EP-A1- 2 347 729
- WO-A1-2009/039254
- DE-A1- 10 315 399
- RU-C1- 2 297 195
- RU-C2- 2 567 596
- US-A- 5 376 004
- US-A1- 2005 287 497
- US-A1- 2009 239 196
- US-A1- 2011 117 522
- US-A1- 2014 272 791

## Description

### Technical field

The invention relates to surgical and orthopaedic dentistry, in particular to implantology, namely to devices for placement of dental prosthesis in place of a lost tooth, or rather to tooth (dental) implants.

### Prior art

The dental implant is placed either directly into the hole formed after tooth extraction or after its healing (delayed implantation). After the dental implant is placed, its surface must be osteointegrated inside the jaw bone. If after implant placement its primary stability is insufficient or the patient has such risk factors as diabetes, smoking, etc., it is preferable to place the implant using two-stage method with closed healing, and prosthetics should be performed after osseointegration.

The implant can be one-component or consist of two or more components. In case of delayed implantation, as a rule, two-component implant is used, which helps to close the soft tissues on top of the implant for the time necessary for healing. Exterior design of most implants resembles a screw. This screw is screwed into maxilla or mandible after preparation of the bone bed for the implant.

In most cases, such dental implant consists of the base part of the implant (hereinafter referred to as BP), placed in the bone tissue of the jaw (in dentistry books it is commonly referred to as implant), and the abutment for fixation of prosthodontic components. The implant has a receiving hole for the abutment at its coronal end. The abutment is fixed in the upper part of the BP by means of a threaded connection and a connecting fixing screw (hereinafter CS), which connects the abutment and the base part, as well as presses the abutment to the surface of the base part of the implant.

The structure of dental implants and features of manufacturing of their component elements are described in several hundred patents in different countries (RU 2602678, 2016; RU 2567596, 2014; RU 2485910, 2012; US 2005/0287497, 2005; WO 03020154, 2003. DE 10315399, 2004; EP 1728486,2006; WO 97/20518,1997; WO 96/29020, 1996, etc.).

In particular, according to the information they contain, the base part is usually made in the form of an appropriately moulded metal body, which consists of intraosseous and extraosseous parts and has a receiving hole at its coronal end, into which the abutment is inserted. (The term "coronal" in this case and in the future will be used for direction that is oriented towards the crown or towards the tooth being placed on it, and cervical refers to the direction oriented to the root of the tooth). At the cervical end the base part on the outside is threaded to secure the implant in a suitably prepared bed in the jawbone. The thread can be both self-tapping and non-self-tapping. In this case, the design of the thread provided in the outer area of the base part is usually designed in view of high primary stability of the system and in view of uniform transfer of forces arising from the masticatory load on the dental implant, on the jaw bone, but its design does not always helps to solve this problem.

Thus, an implant is known in which the base part has an external thread with a thread pitch of about 0.6 mm (US 5588838, 1996). This design does not result in reliable fixation of the implant in the spongy bone and is not able to withstand early masticatory loads, due to the low profile and small pitch of the thread in the base part. Prosthetics using this design can be made only in 3-6 months after its placement, which delays the treatment period.

Carried out with an opportunity of placement in the receiving hole of the base part, the abutment has a surface for direct or indirect placement of orthopaedic restoration (for example, a crown) and a connecting area for connection to the implant, which can usually be inserted into the above-mentioned receiving hole of the implant. Connecting zone of the abutment has a conical part of a certain length of the cone with adjacent cervical direction index part with a certain index length.

Making an abutment connecting zone and corresponding mating inner surface of the implant base provides improved mechanical connection of the elements and promotes formation of a hermetic seal between them, which helps to avoid formation of a gap in which liquids or bacteria can accumulate. However, such conical structures have a number of disadvantages. In particular, the subsequent formation of the implant may cause a height displacement due to the presence of tolerances for the angle and diameter of the cone.

Usually on the surface of the abutment there is an index area, which purpose is to provide a reliable rotation and positioning of the abutment and the implant base part during assembly of the implant and at the same time as a surface for approach the capture tool (RU 2273464, 2006; RU 2485910, 2013).

It is important to choose a connection of the base element - abutment, which should be strong enough, because it transfers the load from the orthopaedic restoration to the osteointegrated base of the implant. Therefore, it should support the implant structures and prevent fractures or weakening of all individual components of dental implant restorations.

Previously such connections used a connecting pin that protruded over the base part of the implant, and the connecting part on the abutment was designed in such a way, that it can be placed exactly on the connecting pin. Thus, connection of these parts was made by means of the screw. However, the lack of structural strength due to possibility of breakage of the pin and technical difficulties of its replacement required a more advanced solution.

In modern products, the connecting pins were transferred to the abutments, and the connection zone - inside the base part of the implant. In this case, the connection in these structures is mainly located inside the implant and is conical and there are guides to prevent rotation of the abutment, and the abutment connection surface is tilted towards the inner surface of the implant. The abutment in the cervical direction, adjacent to the index area at the cervical end, has an end surface with a hole in it. Through this hole, the abutment is connected to the base part by means of a specially selected connecting (fixing) screw. In this case, a threaded portion of the fixing screw is inserted through the abutment hole mentioned above, which is then screwed into the corresponding internal thread of the base part. As a result, the screw head presses the abutment to the base part.

The length of the screw and, in particular, the location of the thread on it are selected in such a way that the abutment screw cannot be engaged with the threaded portion in the implant while the abutment of the end surface of its cam on the cervical end is not placed on the implant platform. This prevents an opportunity that the abutment will be incorrectly secured in the implant by tightening the abutment screw before reaching the desired position.

In particular, an implant (RU 2567596, 2015, with its family member EP 2 347 729 A1, 2011) consisting of a base part, an abutment and a connecting screw is proposed as the closest analogue of the dental implant. At the coronal end of the base part there is a receiving hole for the abutment, which has a conical section and an index section of a cylindrical shape forming a guide surface for the placed abutment. On the cylindrical section of the base part there is at least one groove made in the radial direction to the outside, and on the cylindrical section of the abutment there is the same number of cams, and the grooves are made with an opportunity of engagement with the corresponding abutment cam and having an outer diameter that is less than or equal to the minimum diameter of the conical section. In the cervical direction of the base element there is a threaded portion directly adjacent to the index section to place the locking screw. The abutment also has a bore running in the axial direction for the insertion of the abutment screw. The bore is provided with an internal thread that is embedded in the wall of the bore and which serves to receive a dismantling tool. The thread embedded in the wall weakens its strength. The screw has a bevelled section from its head to its shaft, which, when the abutment is fixed within the implant, creates a frictional connection with a likewise bevelled surface in the bore of the abutment. In practice, the screw often loosens after some time, since the frictional connection exists only at one point between the screw and the abutment.

A further dental implant for placement in a jaw bone, consisting of a base part, an abutment and a connecting screw is known from US 2014/272791 A1.

Common disadvantage of known implants is the lack of consideration of the relationship between the optimal structure of the implant and the gingiva height.

During the dental implant surgery, it is necessary to combine the reliability of the base part - abutment connection and aesthetic requirements to the appearance of the patient's mouth after the implantation. It was determined that the optimal aesthetic perception is achieved when the widest part of the abutment ("shoulders" of the abutment) are located at the level of the gingiva height. In this case the gingiva should be as narrow as possible.

As you know, the function of the abutment is to pass through the soft tissue of the gingiva and connect the base of the implant with orthodontic components. To do this, when placing standard prosthesis, in particular, the nearest analogue, it is necessary to use an abutment of sufficiently large diameter, because the screw head should be located at the level of the gingiva height and have sufficient space inside the thick part of the abutment. In this case, its diameter should be greater than the diameter of the thread. However, in this case, it is not possible to achieve a solution to the problem of rather narrow aesthetic gingiva.

While keeping a narrow gingiva the screw head will be located inside the narrow part of the abutment, which will require reduction of thickness of the abutment wall resulting in a high risk of rupture of the implant during its use and to solve the problem of such a risk it is necessary to have an additional length of the screw. In this case there is a problem: the gingiva characteristic is individual for a particular person, in particular its height can be from 0.5 mm up to 6 mm. At the same time, different gingiva height requires different thread and screw length.

The invention is as defined in the appended claims.

### Brief description of the drawing figures

The technical character of the claimed group of inventions is illustrated by the following drawings. In all the figures in the drawings the same elements have the same positions. The following symbols are used:
1 - the base part of the dental implant;
2 - abutment;
22 - support thread;
3-screw;
33-thread;
333 - screw stem;
3333 - screw head;
GH - gingiva height;
ATH - distance along the axis of the screw from the head to the support thread of the abutment, when the screw head rests in the abutment through hole;
SSH - distance from the screw head to the beginning of the lower part of the stem;
SSS - distance between the screw thread and the screw stem step.

The list of drawings includes:
- Fig. 1: Dental implant with short gingiva height,
- Fig. 2: Dental implant with high gingiva height,
- Fig. 3: Negative type - short screw inside of the abutment-implant combination with high gingiva height,
- Fig. 4: Negative type - long screw inside of the of the abutment-implant combination in short gingiva height,
- Fig. 5: Screw with large screw stem diameter,
- Fig. 6: Screw with a reduced screw stem diameter,
- Fig. 7: Abutment with support thread and screw,
- Fig. 8: Screw with screw thread diameter shift,
- Fig. 9: Dental implant with a screw combination that corresponds to the short gingiva height,
- Fig. 10: Dental implant with a screw combination that corresponds to high gingiva height,
- Fig. 11: Negative type: dental implant with a screw combination that does not coincide with the short gingiva height,
- Fig. 12: Negative type: dental implant with a screw combination that does not coincide with the high gingiva height.

### Technical character of the invention

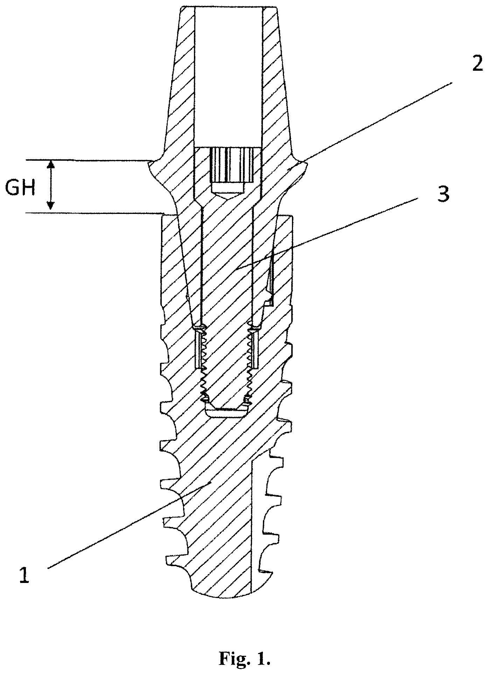

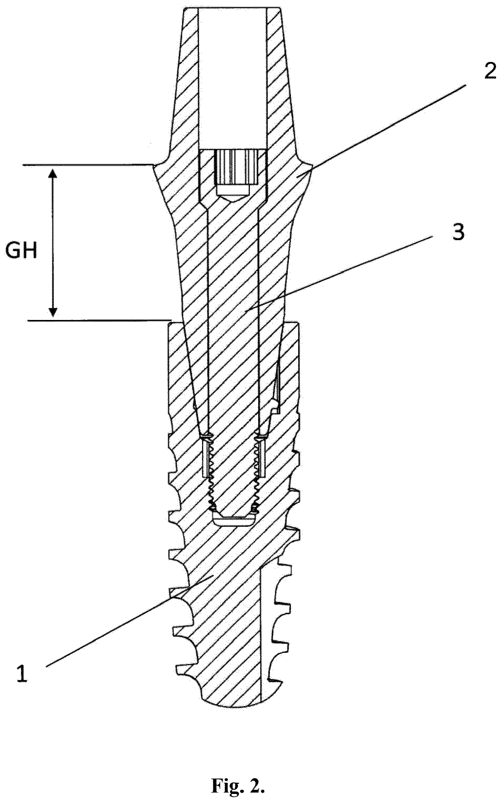

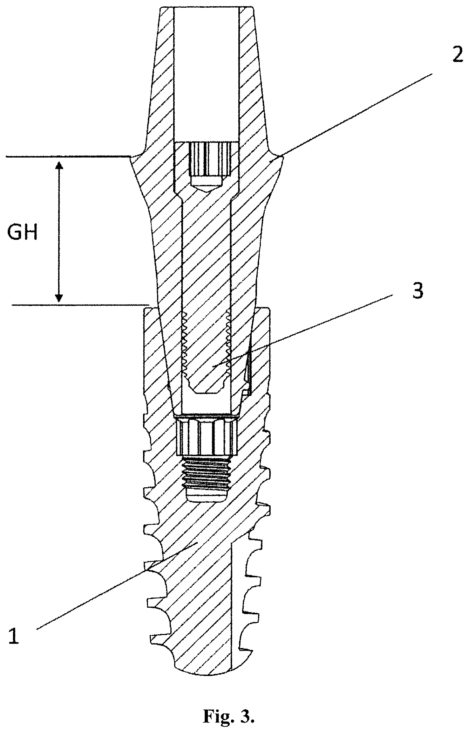

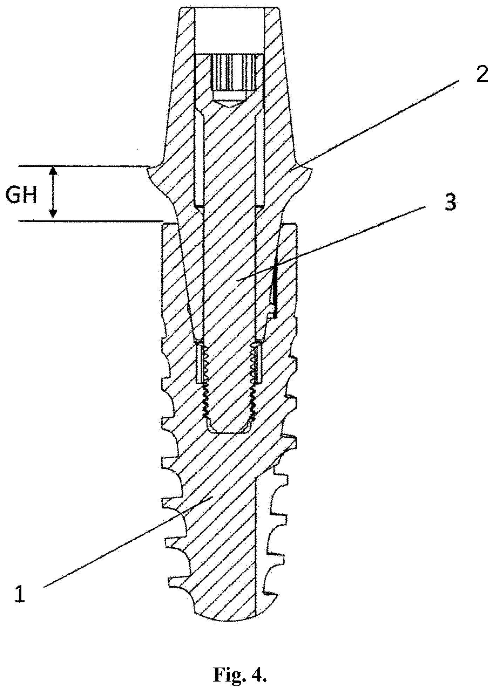

Fig. 1 shows a connection of the implant abutment with a screw inside and short gingiva height (GH). Fig. 2 shows a location of the abutment-implant with a high gingiva height (GH). Analysis of the situation shows that in case of mismatch of the screws, the short screw will not work inside the abutment with high gingiva height (figure 3), and the thread of the long screw will be inside the thread of the implant, but will not press the abutment to the BP of implant (figure 4), which creates a high risk of failure of the connection when the torque is applied to the screw, resulting in an opportunity that the orthodontic part will be attached to the abutment without fixing the abutment to the implant BP.

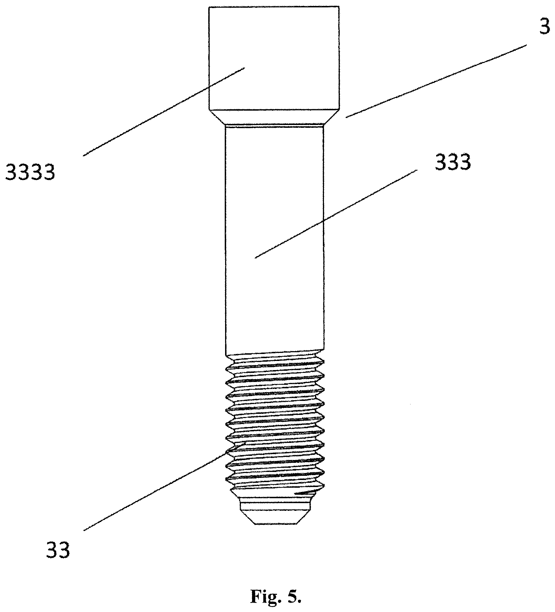

At the heart of the solution of the problem under consideration is a change in the design of the connecting screw. At present, a screw consisting of a head and a stem with a thread placed on its bottom part is used for connection. In this case the diameter of the stem throughout its length and the thread are approximately the same (Standard screw is shown in Fig. 5.)

Such connecting screw is described, in particular, in the patent (RU 2593349, 2016) with the technical character closest to the claimed solution with regard to the screw, where a connecting fixing screw for a dental implant with a length of 1.6 to 3.2 mm with a head diameter of 1.6 to 2.4 mm is proposed, for connecting the abutment to the intraosseous base part. The screw consists of a head and a stem, which lower part has a thread to attach the screw to the implant BP.

Disadvantage of this screw is a lack of reliability of the connection in case of use of the implant in patients with a narrow gingiva of different height.

The technical task in relation to the connecting screw was to modify its design, which provides a reliable abutment-base part connection during surgeries in patients with a narrow gingiva of different heights.

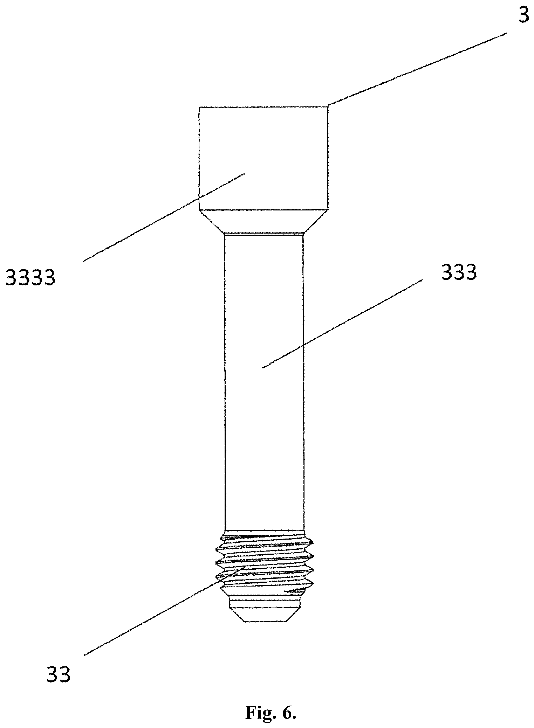

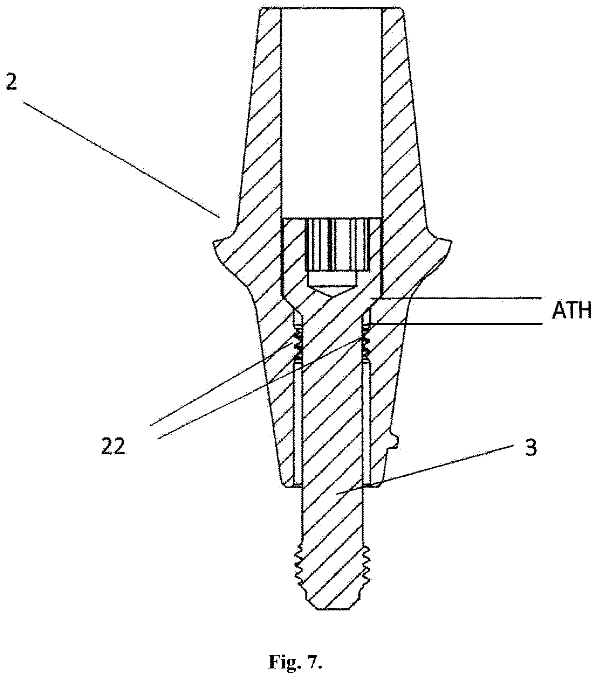

Technical result with respect to the connecting screw is achieved by making a narrower screw stem by boring its lower part up to the thread with a diameter not exceeding the inner diameter (core) of the abutment support thread. This design helps the lower part of the threaded stem to pass through the abutment support thread and be fixed both by a stem of the corresponding diameter in the support thread, and as a threaded connection in the BP thread (general view of the stated screw is shown in Fig. 6), but at its application the design is not strong enough, because the upper part of the screw becomes loosened (application of a screw with a narrower screw stem is shown in Fig. 7).

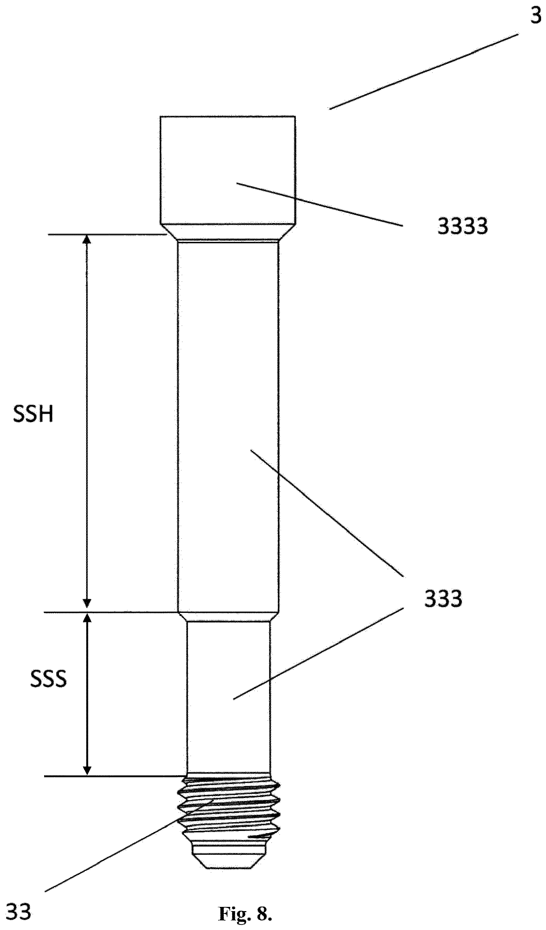

The best results are achieved when the stem is stepped, in which only the lower part from the beginning of the support thread up to the thread on the stem is subjected to boring with a decrease in diameter, and the upper part from the head to the support thread of the abutment remains unchanged and is fixed by the walls of the abutment (figure 8). The screw will have an upper stem with a larger diameter and lower screw stem with a smaller rod diameter.

The screw will thus be characterized by the distance from the screw head to the beginning of the lower part - the screw step height (SSH), which can vary along the axial height in relation to the screw head, and the ratio of its parameters in relation to the abutment - the distance along the axis of the screw from the head to the support thread of the abutment, when the screw head rests in the abutment through hole, which is named the abutment thread height (ATH), and which determines the tightness between the abutment and the BP.

The technical result with regard to the dental implant containing the base part, the abutment and the connecting screw is that it includes the above-described connecting screw with a step stem, in which the distance from the screw head to the beginning of the lower part - the screw step height (SSH) is less than the distance along the axis from the screw head to the abutment thread (ATH) by 0.1-1 mm. The best results were observed at a difference of 0.2-0.3 mm.

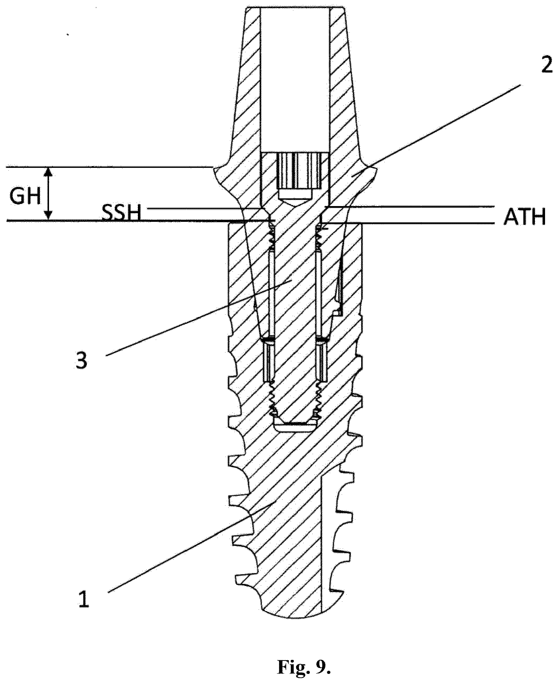

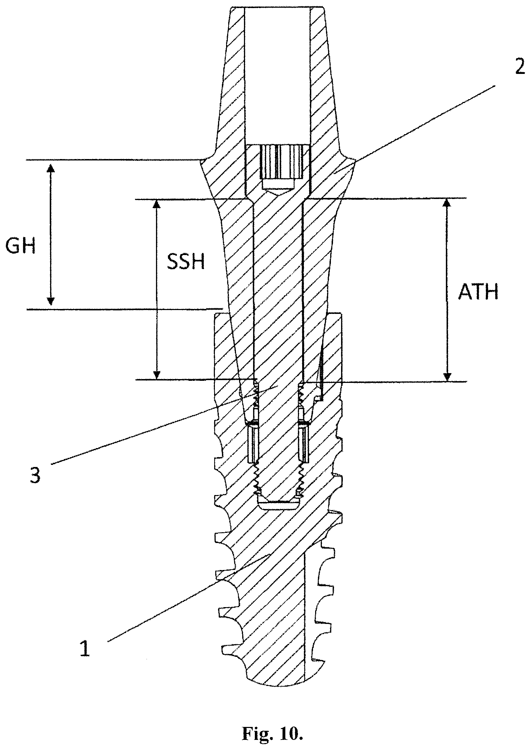

Fig. 9 and 10 show correct use of a combination of abutment screws inside the implant. The abutments and the implant have an appropriate implant-abutment-bond for connection to each other.

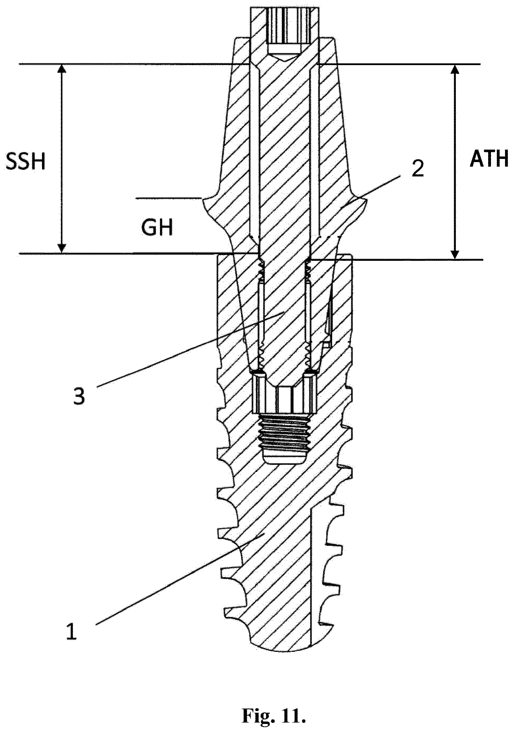

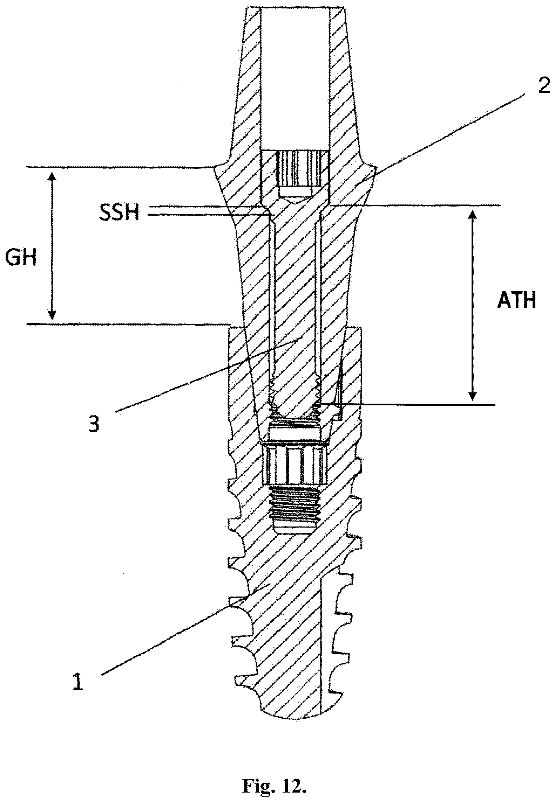

Fig. 11 and 12 show that if this condition is not met, a poor connection of the elements occurs, as a result of which a short screw inside the abutment for a large height of the gingiva cannot reach the implantation thread, and a screw with a longer pin pitch inside the abutment for a short height of the gingiva will not pass through the supporting thread, as a result of which it will not reach the implant thread.

In such compositions it is necessary either to reduce the distance between the screw thread and the screw stem step (SSS) by increasing the gingiva height and, accordingly, increase the length of the screw or it is necessary to increase the ATH so that the longer screws work together with the selected abutments.

In case of the right ratio of ATH and SSH the selected abutments can be used together with screws with approximately the same nominal diameter of the thread, but with different lengths, which helps to prevent failures when treating the patients. One of the problems solved in the framework of dental prosthetics is a set of elements of the implant, which helps the doctor to design the implant and to choose a combination of elements that provides reliable BP-abutment connection during the operation.

In this regard, a implantation kit is proposed (RU 2 602 678, 2015), which is the closest analogue for the disclosed kit (not claimed), in which the abutment is provided with auxiliary elements, in particular, a screw, which length and location of the thread on it are calculated in such a way that the abutment screw cannot be engaged with the threaded portion in the implant while the abutment of the end surface of its cam on the cervical end is not placed on the implant platform, the gingiva liner, which is made in such a way, that in the inserted position it does not touch the conical surface of the implant and has a contact surface through which it is adjacent to the end face of the implant, additional abutment and moulding element.

Disadvantage of this kit is inability to vary its components depending on characteristics of the surgery for a particular patient. The technical result with respect to the kit is to include in the kit - along with the abutment as a part of the additional elements - of the kit of connecting screws having the above described step pin, with a different distance from the screw head to the bore zone of the pin corresponding to the requirements for the abutment in case of a low, medium and high gingiva of the patient. Use of such kit helps to reduce the surgery time, to increase the reliability of the implant attachment, to simplify the technology of industrial production of dental implants.

### Industrial applicability

The prosthesis should be placed as follows. Determine the height of the patient's gingiva and select the appropriate abutment 2. In the patient's mouth, at the first stage of treatment place the basic part 1 in the jaw bone, the basic part 1 has a thread on the outer side, so that placement in the jaw bone can be carried out by screwing into the hole. The thread pitch can be made uniform or variable, and due to appropriate selection of parameters various possible biological factors, etc., as well as different implantation type can also be taken into account. In this case the design and parameters of the thread are calculated, in particular, taking into account the desirable high primary stability and uniform transfer of forces arising from the masticatory load of the dental implant on the jaw bone. Properly formed cone provides self-braking connection when abutment 2 is inserted into BP 1, providing additional stability of the connection.

After placement of the basic part 1 to the jaw bone, there is a phase of implantation from four weeks up to six months, during which the basic part must grow into the tissue and the jaw bone. Then, at the second stage of treatment, an abutment 2 with the placed denture element can be inserted. In case of particularly favourable bone behaviour and correspondingly high primary stability, abutment 2 and other prosthetic components can be placed even immediately after the placement of the base part of the implant. In order to place using a simple method of mechanically relatively stable connection between the base part 1 and the abutment 2, a contact pin is made on the abutment, which at assembly of the base part 1 with the abutment 2 is placed in the shaped recess in the base part. The mechanical connection of the base part 1 to the abutment 2 is carried out by means of a connecting screw 3, the stem 333 is inserted into the abutment by screwing through the support thread 22, lowered to the BP 1, after which the thread of the connecting screw 33 is screwed into the internal thread of the base part 2. In this case, the head 3333 of the connecting screw 3 presses the abutment 2 to the base part 1.

Both the base part of the implant and the abutment are usually made of metal or ceramics, in particular titanium, zirconium, titanium alloy, zirconium alloy, titanium-containing alloy, zirconium-containing alloy, ceramics of zirconium oxides and aluminum. In addition, ceramics based on silicon or silicon oxide and containing, for example, carbon or tungsten can be used.

Use of the claimed invention can improve the quality of prosthetics, reduce its complexity.

## Claims

1. Dental implant for placement in a jaw bone, consisting of a base part (1), an abutment (2) and a connecting screw (3), wherein a coronal end of the base part (1) has a receiving hole for the abutment (2), having in the direction from the coronal end a conical index portion forming a guide surface for the abutment (2), and in the cervical direction there is a threaded portion directly adjacent to the index portion for screwing in the connecting screw (3), wherein the abutment (2) contains a connecting zone for connection with the base part (1), having a conical portion to which an index area is adjacent in the cervical direction forming a guide surface for the surface of the index portion of the base part (1) when the abutment (2) is placed in the base part (1), and at the cervical end it has an end surface with a through hole in that a support thread (22) is arranged through which a threaded portion (33) of the connecting screw (3) can be introduced,
**characterized in that** the connecting screw (3) comprises a head (3333) and a stepped stem (333) with a reduced diameter in a lower part that has the thread portion (33) on its end and wherein the diameter of the lower stem part is not exceeding the inner diameter of the support thread (22), wherein the support thread (22) protrudes from the surface of the through hole, wherein when the threaded portion (33) of the connection screw (3) is inserted through the through hole and screwed into the corresponding threaded portion of the base part (1),
the screw head (3333) rests in the abutment through hole and presses the abutment (2) to the base part (1 ), the lower stem part extends through the support thread (22) to the screw thread (3333), and a distance (SSH) from the screw head (3333) to the beginning of the lower stem part is less than a distance (ATH) along the axis from the screw head (3333) to the support thread (22) by 0.1-1 mm.

2. Dental implant according to claim 1,
**characterized in**
**that** the distance (SSH) from the screw head (3333) to the beginning of the lower stem part is less than a distance (ATH) along the axis from the screw head (3333) to the support thread (22) by 0.2-0.3mm.

3. Use of the connecting screw (3) in the dental implant according to claim 1, for connecting the abutment (2) to the base part (1), the connecting screw comprising a head (3333) and a stepped
stem (333) with a reduced diameter in a lower part that is threaded (33) on its end,
wherein the lower stem part is adapted with an extend that corresponds to a distance from the abutment support thread (22) to the screw thread (33), measured when the screw head (3333) rests in the abutment through hole, and that the distance (SSH) from the screw head (3333) to the beginning of the lower stem part is less than a distance (ATH) along the axis from the screw head (3333) to the support thread (22) by 0.1-1 mm, preferably by 0.2-0.3mm.

## Patentansprüche

1. Zahnimplantat zur Platzierung in einem Kieferknochen, bestehend aus einem Basisteil (1), einem Aufbau (2) und einer Verbindungsschraube (3), wobei ein koronales Ende des Basisteils (1) ein Aufnahmeloch für den Aufbau (2) aufweist, das in der Richtung von dem koronalen Ende einen konischen Indexabschnitt aufweist, der eine Führungsfläche für den Aufbau (2) bildet, und in der zervikalen Richtung ein Gewindeabschnitt direkt benachbart dem Indexabschnitt zum Einschrauben der Verbindungsschraube (3) vorhanden ist, wobei der Aufbau (2) eine Verbindungszone zur Verbindung mit dem Basisteil (1) enthält, die einen konischen Abschnitt aufweist, dem ein Indexbereich in der zervikalen Richtung benachbart ist, der eine Führungsfläche für die Fläche des Indexabschnitts des Basisteils (1) bildet, wenn der Aufbau (2) in den Basisteil (1) platziert wird, und an dem zervikalen Ende er eine Endfläche mit einem Durchgangsloch aufweist, in dem ein Stützgewinde (22) angeordnet ist, durch das ein Gewindeabschnitt (33) der Verbindungsschraube (3) eingeführt werden kann,
**dadurch gekennzeichnet, dass** die Verbindungsschraube (3) einen Kopf (3333) und einen abgestuften Schaft (333) mit einem verringerten Durchmesser in einem unteren Teil umfasst, der den Gewindeabschnitt (33) an seinem Ende aufweist, und wobei der Durchmesser des unteren Schaftteils den Innendurchmesser des Stützgewindes (22) nicht überschreitet, wobei das Stützgewinde (22) von der Fläche des Durchgangslochs vorsteht, wobei, wenn der Gewindeabschnitt (33) der Verbindungsschraube (3) durch das Durchgangsloch eingesetzt und in den entsprechenden Gewindeabschnitt des Basisteils (1) eingeschraubt wird,
der Schraubenkopf (3333) in dem Aufbaudurchgangsloch liegt und den Aufbau (2) an den Basisteil (1) presst, der untere Schaftteil sich durch das Stützgewinde (22) zu dem Schraubengewinde (3333) erstreckt, und eine Distanz (SSH) von dem Schraubenkopf (3333) zum Beginn des unteren Schaftteils um 0,1 bis 1 mm kleiner ist als eine Distanz (ATH) entlang der Achse von dem Schraubenkopf (3333) zum Stützgewinde (22).

2. Zahnimplantat nach Anspruch 1,
**dadurch gekennzeichnet, dass**
die Distanz (SSH) von dem Schraubenkopf (3333) zum Beginn des unteren Schaftteils um 0,2 bis 0,3 mm kleiner ist als eine Distanz (ATH) entlang der Achse von dem Schraubenkopf (3333) zum Stützgewinde (22).

3. Verwendung der Verbindungsschraube (3) in dem Zahnimplantat nach Anspruch 1, zur Verbindung des Aufbaus (2) mit dem Basisteil (1), wobei die Verbindungsschraube einen Kopf (3333) und einen abgestuften Schaft (333) mit einem verringerten Durchmesser in einem unteren Teil aufweist, der an seinem Ende ein Gewinde (33) aufweist,
wobei der untere Schaftteil mit einer Ausdehnung angepasst ist, die einer Distanz von dem Aufbaustützgewinde (22) zum Schraubengewinde (33) entspricht, gemessen wenn der Schraubenkopf (3333) in dem Aufbaudurchgangsloch liegt, und dass die Distanz (SSH) von dem Schraubenkopf (3333) zum Beginn des unteren Schaftteils um 0,1 bis 1 mm, vorzugsweise um 0,2 bis 0,3 mm kleiner ist als eine Distanz (ATH) entlang der Achse von dem Schraubenkopf (3333) zum Stützgewinde (22).

## Revendications

1. Implant dentaire destiné à être placé dans un os maxillaire, constitué par une partie de base (1), un pilier (2) et une vis d'assemblage (3), dans lequel une extrémité coronale de la partie de base (1) a un trou de réception pour le pilier (2), ayant dans la direction depuis l'extrémité coronale une partie index conique formant une surface de guidage pour le pilier (2), et dans la direction cervicale se trouve une partie filetée directement adjacente à la partie index pour visser la vis d'assemblage (3), dans lequel le pilier (2) contient une zone d'assemblage pour l'assemblage avec la partie de base (1), ayant une partie conique à laquelle une zone d'index est adjacente dans la direction cervicale formant une surface de guidage pour la surface de la partie index de la partie de base (1) lorsque le pilier (2) est placé dans la partie de base (1), et au niveau de l'extrémité cervicale il a une surface d'extrémité avec un trou débouchant à l'intérieur duquel un filetage d'appui (22) est agencé dans lequel une partie filetée (33) de la vis d'assemblage (3) peut être introduite,
**caractérisé en ce que** la vis d'assemblage (3) comprend une tête (3333) et une tige étagée (333) avec un diamètre réduit dans une partie inférieure qui a la partie filetée (33) sur son extrémité et dans lequel le diamètre de la partie tige inférieure n'excède pas le diamètre interne du filetage d'appui (22), dans lequel le filetage d'appui (22) fait saillie de la surface du trou débouchant, dans lequel lorsque la partie filetée (33) de la vis d'assemblage (3) est insérée à travers le trou débouchant et vissée dans la partie filetée correspondante de la partie de base (1),
la tête de vis (3333) repose dans le trou débouchant de pilier et presse le pilier (2) contre la partie de base (1), la partie tige inférieure s'étend à travers le filetage d'appui (22) jusqu'à la tête de vis (3333), et une distance (SSH) depuis la tête de vis (3333) jusqu'au début de la partie tige inférieure est plus courte qu'une distance (ATH) le long de l'axe depuis la tête de vis (3333) jusqu'au filetage d'appui (22) de 0,1 à 1 mm.

2. Implant dentaire selon la revendication 1,
**caractérisé en ce que**
la distance (SSH) depuis la tête de vis (3333) jusqu'au début de la partie tige inférieure est plus courte qu'une distance (ATH) le long de l'axe depuis la tête de vis (3333) jusqu'au filetage d'appui (22) de 0,2 à 0,3 mm.

3. Utilisation de la vis d'assemblage (3) dans l'implant dentaire selon la revendication 1, pour l'assemblage du pilier (2) à la partie de base (1), la vis d'assemblage comprenant une tête (3333) et une tige étagée (333) avec un diamètre réduit dans une partie inférieure qui est filetée (33) sur son extrémité,
dans lequel la partie tige inférieure est adaptée avec une extension qui correspond à une distance depuis le filage d'appui de pilier (22) jusqu'à la tête de vis (33), mesurée lorsque la tête de vis (3333) repose dans le trou débouchant de pilier, et la distance (SSH) depuis la tête de vis (3333) jusqu'au début de la partie tige inférieure est plus courte qu'une distance (ATH) le long de l'axe depuis la tête de vis (3333) jusqu'au filetage d'appui (22) de 0,1 à 1 mm, de préférence de 0,2 à 0,3 mm.
